# EUROPEAN PATENT SPECIFICATION

(11) **EP 2 556 997 B1**
(45) Date of publication and mention of the grant of the patent: **13.03.2019**
(21) Application number: 10849476.6
(22) Date of filing: 02.07.2010
(51) Int. Cl.: B60R 16/02, B60K 37/02, B60K 35/00, B60R 16/023

(54) **VEHICLE INFORMATION MONITORING APPARATUS**
VORRICHTUNG ZUR ÜBERWACHUNG VON FAHRZEUGINFORMATIONEN
APPAREIL DE SURVEILLANCE D'INFORMATIONS DE VÉHICULE

(30) Priority: 07.04.2010 JP 2010088829
(43) Date of publication of application: 13.02.2013
(73) Proprietor: Yamaha Hatsudoki Kabushiki Kaisha, Iwata-shi, Shizuoka 438-8501 (JP)
(72) Inventor: ITO, Sachio, Iwata-shi Shizuoka 438-8501 (JP)
(74) Representative: Stöckeler, Ferdinand
(86) International application number: PCT/JP2010/061339
(87) International publication number: WO 2011/125236

(56) References cited:
- JP-A- 3 087 671
- JP-A- H09 159 581
- JP-A- 2002 228 551
- JP-A- 2004 017 676
- JP-A- 2004 291 798
- JP-A- 2008 049 731
- US-A1- 2004 029 556

## Description

### Technical Field

The present invention relates to a vehicle information monitoring device for obtaining vehicle information from a vehicle control device.

### Background Art

A vehicle includes a display unit that displays vehicle information such as a vehicle speed and a vehicle control unit for controlling respective sections (mainly, electrical components) of the vehicle. The vehicle control unit controls, for example, the operation of electrical components such as an ignition plug and fuel injector included in a vehicle engine. Sensors necessary for such a control operation are connected to the vehicle control unit. The sensors include, for example, a vehicle speed sensor, an engine speed sensor, a coolant temperature sensor, an intake temperature sensor, and a throttle opening degree sensor.

The display unit is arranged so as to obtain necessary information by communication with the vehicle control unit. For example, the display unit is arranged so as to obtain information such as a vehicle speed, an engine speed, and a coolant temperature from the vehicle control unit and display the information.

The vehicle control unit includes a memory that stores vehicle information and a communication port for reading out vehicle information from the memory in some cases. By reading out vehicle information stored in the memory via the communication port, a fault diagnosis of the vehicle can be performed.

However, in some other cases, the vehicle control unit cannot include a memory and communication port for a fault diagnosis. For example, there is a strict limit to the size of a vehicle control device of a saddle type vehicle such as a motorcycle because of limitation in mounting space. For this reason, there is no allowance for including a memory for a fault diagnosis and a dedicated communication port.

Patent Document 1 discloses a meter display device including a memory for storing information obtained from a vehicle-side ECU (Electronic Control Unit) . According to this configuration, it becomes no longer necessary to include a memory for a fault diagnosis or a dedicated communication port in the vehicle control unit.

JP2008049731A discloses the preamble of claim 1.

### Citation List

### Patent Literature

Patent Document 1: Japanese Published Unexamined Patent Application No. 2004-291798

### Summary of Invention

In the prior art of Patent Document 1, when information stored in the memory is to be read out to another processor, it is necessary to include a dedicated communication port. Therefore, as in the case of the vehicle control unit, depending on the type of vehicle, the memory and communication cannot be included in some cases because of limitation in mounting space of the meter display device.

The present invention provides a vehicle information monitoring device capable of obtaining vehicle information without making a significant modification in the vehicle information display device and vehicle control device (in particular, without including a dedicated memory and port).

The present invention provides a vehicle information monitoring device for obtaining vehicle information from a vehicle control device that communicates with a vehicle information display device. The vehicle information display device is arranged so as to generate a request code directed to the vehicle control device and receive response data from the vehicle control device. The vehicle control device is arranged so as to generate response data including vehicle information according to a request code. The vehicle information monitoring device includes a first communication means for communicating with the vehicle information display device, a second communication means for communicating with the vehicle control device, a request control means for causing the second communication means to transmit a second request code when the first communication means receives a first request code, a response control means for causing the first communication means to transmit response data corresponding to a first request code received by the first communication means, and a storage means for storing response data received by the second communication means in coordination with a second request code. The request control means is arranged so as to cause, if response data corresponding to the first request code is not stored in the storage means, the second communication means to transmit the first request code as the second request code, and cause, if response data corresponding to the first request code is stored in the storage means, the second communication means to transmit a third request code different from the first request code as the second request code. The response control means is arranged so as to cause the first communication means to transmit response data received by the second communication means when the second request code is equal to the first request code, and when the second request code is different from the first request code, read response data corresponding to the first request code out of the storage means and cause the first communication means to transmit the response data.

The vehicle information display device can obtain vehicle information by communication with the vehicle control device. Specifically, the vehicle information display device generates a request code to request necessary information. The vehicle control device, upon receiving the request code, generates response data (including vehicle information) corresponding to the request code. The vehicle information display device, by use of the vehicle information included in the response data, performs a necessary display.

The vehicle information monitoring device is arranged so as to communicate with the vehicle information display device by the first communication means and communicate with the vehicle control device by the second communication means. Therefore, the vehicle information monitoring device can relay communication between the vehicle information display device and the vehicle control device. That is, the vehicle information monitoring device can transmit a request code received from the vehicle information display device to the vehicle control device, receive response data for the request code from the vehicle control device, and transmit the response data to the vehicle information display device. Accordingly, the vehicle information monitoring device can provide necessary information for the vehicle information display device.

The vehicle information monitoring device further has a storage means for storing response data received from the vehicle control device. The vehicle information monitoring device, when response data corresponding to a request code received from the vehicle information display device is stored in the storage means, transmits the stored response data to the vehicle information display device. Accordingly, the vehicle information display device can obtain necessary vehicle information (response data). The vehicle information monitoring device, when response data corresponding to a first request code received from the vehicle information display device is stored in the storage means, transmits a third request code different from the first request code to the vehicle control device. Accordingly, the vehicle information monitoring device can obtain vehicle information different from the vehicle information corresponding to the first request code from the vehicle control device. For example, the vehicle information monitoring device can obtain from the vehicle control device even vehicle information of a type the vehicle information display device does not request.

In this way, the vehicle information monitoring device can relay communication between the vehicle information display device and the vehicle control device, while obtaining necessary vehicle information from the vehicle control device.

It does not matter even when the vehicle information monitoring device is complicated in configuration to some extent and is large-sized to some extent because it does not need to be mounted on a vehicle in normal use of the vehicle . Therefore, even in the case of a vehicle where the space to place the vehicle information display device and vehicle control device is limited, as in, for example, a saddle type vehicle represented by a motorcycle, vehicle information can be obtained therefrom according to necessity. Of course, it is not necessary to greatly change the configuration of the vehicle information display device and vehicle control device. That is, it is not necessary to include a dedicated memory and dedicated communication port for monitoring vehicle information in either or both of the vehicle information display device and vehicle control device. In other words, the vehicle may not include a dedicated memory and dedicated communication port for monitoring vehicle information in either or both of the vehicle information display device and vehicle control device.

The vehicle control device is arranged, for example, so as to control electrical components included in the vehicle. The electrical components include, for example, electrical components related to an engine. Specific examples of such electrical components include components related to driving of an engine, such as an ignition plug (ignition coil), a fuel injector, and a fuel pump. The vehicle control device is input with output signals of sensors. Specific examples of the sensors include a vehicle speed sensor, an engine speed sensor, a coolant temperature sensor, and an intake air temperature sensor. The engine speed sensor includes, for example, a crank angle sensor that detects the rotation angle of a crankshaft of the engine.

The vehicle information may include sensor output information output by sensors mounted on the vehicle. Examples of the sensor output information include a vehicle speed, an engine speed, a coolant temperature, an intake air temperature, a gear position, and a remaining fuel amount. The coolant temperature is the temperature of a coolant to cool an engine. The intake air temperature is the temperature of air to be taken in an engine, and can be used as an alternative indicator of an environmental temperature. The gear position is information indicating the gear position of a transmission included in the vehicle.

Moreover, the vehicle information may include calculation information prepared by internal calculation of the vehicle control device. Examples of the calculation information include control command information such as a fuel injection amount (fuel injection time) and various warnings. The warning is information to notify an abnormality such as a fault. Depending on the vehicle configuration, the gear position can also be an example of the control command information.

The vehicle information to be displayed by the vehicle information display device includes, for example, one or more of the vehicle speed, engine speed, coolant temperature, intake air temperature, warning, gear position, and remaining fuel amount. It is preferable that the vehicle information to be displayed by the vehicle information display device includes at least the sensor output information. More specifically, it is preferable that the vehicle information to be displayed by the vehicle information display device includes at least the vehicle speed and remaining fuel amount.

The vehicle control device may be arranged so as to be capable of transmitting not only vehicle information corresponding to a request code generated by the vehicle information display device but also other vehicle information, in the form of the response data. That is, it is preferable that the vehicle control device is arranged so as to, when the vehicle information monitoring device generates a request code other than a request code generated by the vehicle information display device, include vehicle information corresponding to such a request code in response data. Accordingly, the vehicle information monitoring device can obtain not only vehicle information that can be obtained by the vehicle information display device but also other vehicle information, from the vehicle control device. It is preferable that the vehicle information monitoring device is arranged so as to be capable of generating either a request code to request sensor output information or a request code to request calculation information or both thereof.

In a preferred embodiment of the present invention, the response data includes first vehicle information and second vehicle information that are different in type. Moreover, the response control means is arranged so as to include the first vehicle information in response data received by the second communication means into response data to be transmitted from the first communication means regardless of whether the second request code is equal to the first request code. Moreover, the response control means is arranged so as to include the second vehicle information in response data received by the second communication means in response data to be transmitted from the first communication means when the second request code is equal to the first request code. Further, the response control means is arranged so as to read the second vehicle information in response data corresponding to the first request code out of the storage means and include the second vehicle information in response data to be transmitted from the first communication means when the second request code is different from the first request code.

In other words, when the second request code is equal to the first request code, the first vehicle information and the second vehicle information in response data received by the second communication means (that is, the response data received by the second communication means) are transmitted from the first communication means as it is. On the other hand, when the second request code is different from the first request code, the first vehicle information in response data received by the second communication means and the second vehicle information (only the information corresponding to the first request code) read out of the storage means are transmitted from the first communication means.

According to this arrangement, response data to be generated by the vehicle control device includes first vehicle information and second vehicle information. The first vehicle information thereof is always included in response data to be transmitted to the vehicle information display device. In terms of second vehicle information, not the information received from the vehicle control device but information read out of the storage means is included in response data and transmitted to the vehicle information display device in some cases.

The vehicle information display device can obtain the latest first vehicle information every time generating a request code. Therefore, the vehicle information display device can obtain the first vehicle information without delay. The second vehicle information to be received by the vehicle information display device, on the other hand, is not the latest information at the time of generation of the request code in some cases. That is, the second vehicle information to be transmitted to the vehicle information display device is information obtained before and stored in the storage means in some cases. Therefore, the second vehicle information to be received by the vehicle information display device is not the latest information in some cases, but the first vehicle information is always the latest information. Accordingly, if the first vehicle information is set as high-priority information beforehand, there is not a substantial problem in a display of the vehicle information display device. That is, for example, the first vehicle information may be vehicle information of a higher priority than that of the second vehicle information. For example, the first vehicle information may be vehicle information with a required updating period in the vehicle information display device shorter than that of the second vehicle information.

Examples of the first vehicle information include a vehicle speed, an engine speed, and a warning. It is preferable that the first vehicle information includes at least a vehicle speed. Moreover, it is more preferable that the first vehicle information includes at least a vehicle speed and a warning. Vehicle information other than first vehicle information can be second vehicle information. Examples of the second vehicle information include a coolant temperature and an intake air temperature. For example, the first vehicle information may include a vehicle speed, an engine speed, and a warning, and the second vehicle information may include a coolant temperature and an intake air temperature. In this case, a slight time lag occurs in a display of the coolant temperature and intake air temperature, but the vehicle speed, engine speed, and warning are displayed in real time. Therefore, the information with high importance is provided in real time for an occupant such as a driver of the vehicle, while the vehicle information can be monitored by the vehicle information monitoring device. That is, in a driving state of the vehicle, vehicle information can be obtained.

A vehicle information monitoring device according to a preferred embodiment of the present invention further includes a request code storage means storing a third request code that needs to be transmitted from the second communication means. Moreover, the request control means is arranged so as to cause, when response data corresponding to the first request code is stored in the storage means, the second communication means to transmit as the second request code a third request code stored in the request code storage means.

According to this arrangement, by storing in advance a request code that needs to be monitored in the request code storage means, necessary vehicle information can be collected. It is preferable that the vehicle information monitoring device further includes an interface with an external processor, and is arranged so as to allow writing of a request code from the interface to the request code storage means. Accordingly, arbitrary vehicle information can be obtained as long as the vehicle control device makes a response.

It is preferable that the vehicle information monitoring device further includes a storage control means for deleting the oldest data when response data stored in the storage means reaches a predetermined amount. According to this configuration, the storage capacity of response data to be stored in the storage means is limited to a predetermined amount. Additionally, because old data is deleted, vehicle information to be delivered to the vehicle information display device is not excessively old. Accordingly, a delay in updating of information to be displayed on the vehicle information display device can be suppressed.

It is preferable that the vehicle information monitoring device further includes a response data storage means for storing response data received by the second communication means, separately from the storage means. According to this arrangement, because response data is written in the response data storage means, by reading out storage data of the response data storage means, vehicle information can be obtained. By using the vehicle information, for example, a fault diagnosis can be performed. In particular, when the storage capacity of the storage means is limited to a predetermined amount, by making the response data storage means store old response data beforehand, vehicle information of a sufficient data amount can be subsequently analyzed.

Of course, an interface for outputting obtained vehicle information to an external processor may be provided without providing a response data storage means. Additionally, the vehicle information monitoring device may be arranged so as to transmit vehicle information obtained from the vehicle control device from the interface to the external processing device.

It is preferable that the response data storage means is in a form of a nonvolatile storage means. The nonvolatile storage means is a storage means that can hold data even after the vehicle information monitoring device is powered off. Such a nonvolatile storage means may be a nonvolatile memory represented by a flash memory, may be a hard disk drive, and may be a volatile memory with a backup power supply.

In a preferred embodiment of the present invention, the response data includes checksum data. Moreover, the response control means is arranged so as to prepare checksum data corresponding to a data amount of response data the first transmitting means is caused to transmit, and include the checksum data in response data to be transmitted from the first communication means.

The vehicle information monitoring device transmits a request code different from a request code received from the vehicle information display device to the vehicle control device in some cases. At this time, the vehicle information monitoring device transmits response data different from response data received from the vehicle control device to the vehicle information display device. Therefore, checksum data included in the response data received from the vehicle control device does not match the data amount to be transmitted to the vehicle information display device. Therefore, the vehicle information monitoring device prepares checksum data corresponding to the data amount of response data to be transmitted to the vehicle information display device, and makes the response data include the checksum data. Accordingly, the vehicle information monitoring device can relay communication between the vehicle information display device and the vehicle control device without causing a communication error.

In a preferred embodiment of the present invention, the vehicle control device and the vehicle information display device are connected by a wired communication line, and a first connector and a second connector that can couple with each other are provided halfway on the wired communication line. Additionally, the first connector is connected to the vehicle information display device, and the second connector is connected to the vehicle control device. Moreover, the first communication means includes a first connecting portion to be connected to the first connector, and the second communication means includes a second connecting portion to be connected to the second connector.

According to this arrangement, the vehicle control device and the vehicle information display device are connected by a wired communication line, and a first connector and a second connector are provided halfway on the wired communication line. In a normal use state of the vehicle, the first connector and the second connector are coupled, and the vehicle control device and the vehicle information display device carry out information communication directly. When obtaining vehicle information, coupling between the first connector and the second connector is released, and the first connector and the second connector are connected to the first connecting portion and the second connecting portion of the vehicle information monitoring device, respectively. Accordingly, the vehicle control device and the vehicle information display device can be relayed by the vehicle information monitoring device, while communicating with each other. In other words, the vehicle information monitoring device respectively communicates with the vehicle control device and the vehicle information display device. By thus releasing coupling between the first connector and the second connector and connecting the first and second connectors to the vehicle information monitoring device, vehicle information can be easily obtained. In a normal use state, because it is not necessary to keep the vehicle information monitoring device connected, it is not necessary to secure a space to place the vehicle information monitoring device in the vehicle.

The "halfway on the wired communication line" means any position from one end to the other end of the wired communication line. That is, an intermediate portion, a one-end portion, and an other-end portion of a wired communication line are all covered by the "halfway on the wired communication line."

A vehicle information monitoring device according to a preferred embodiment of the present invention is arranged so as to relay a request code and response data between the vehicle control device and the vehicle information display device. According to this arrangement, the vehicle information monitoring device can cause the vehicle control device and the vehicle information display device to perform communication therebetween by relaying therebetween, while obtaining vehicle information. Therefore, vehicle information can be obtained in a driving state of the vehicle.

The above and other objects, features, and advantages of the present invention will become apparent through the following description of embodiments with reference to the accompanying drawings.

### Brief description of Drawings

FIG. 1 is a block diagram for explaining an electrical configuration of a vehicle to which a vehicle information monitoring device according to a preferred embodiment of the present invention is applicable, and shows a normal use state of a vehicle.
FIG. 2 is a block diagram for explaining a configuration of the vehicle information monitoring device according to the preferred embodiment of the present invention, and shows a configuration when obtaining vehicle information.
FIG. 3 is a view showing examples of data that appear on a wired communication line in the normal use state of a vehicle .
FIG. 4 is a view showing a communication timing between a display unit and a vehicle control unit in the normal use state (refer to FIG. 1) of a vehicle.
FIG. 5 is a view for explaining the content of communication when the vehicle information monitoring device is connected between the display unit and the vehicle control unit (refer to FIG. 2).
FIG. 6 is a timing chart showing a communication timing corresponding to FIG. 5.
FIG. 7 is a flowchart for explaining a processing that is executed by a microcomputer of the vehicle information monitoring device.

### Description of Embodiments

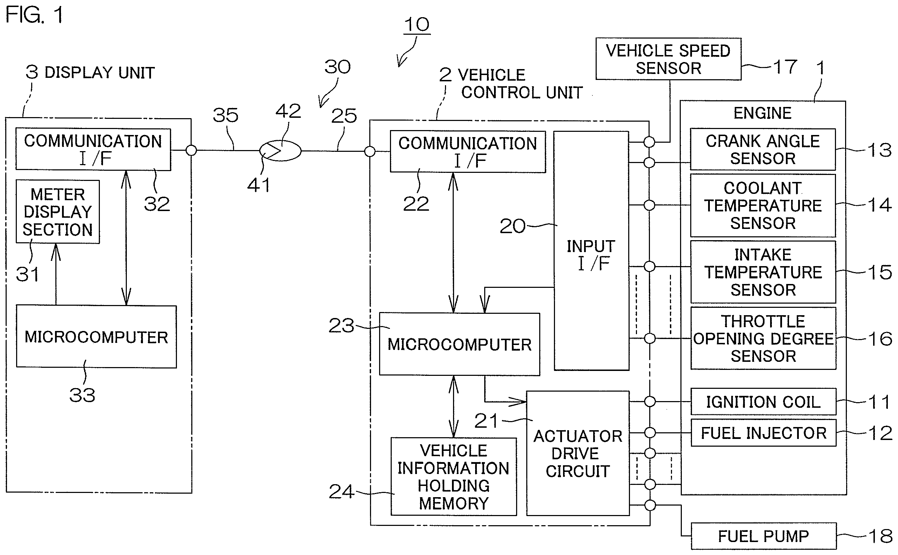

FIG. 1 is a block diagram for explaining an electrical configuration of a vehicle to which a vehicle information monitoring device according to a preferred embodiment of the present invention can be applied. The vehicle 10 includes an engine 1, a vehicle control unit 2, and a display unit 3. The vehicle control unit 2 is programmed so as to control the operation of electrical components related to the vehicle 10. More specifically, the vehicle control unit 2 is mounted on the vehicle 10, and controls the operation of electrical components included in the engine 1 and electrical components related to the engine 1. The engine 1, in the present preferred embodiment, is an internal combustion engine, and more specifically, a 4-cycle gasoline engine. In the engine 1, an ignition coil 11 and a fuel injector 12 are included as electrical components. The ignition coil 11 is arranged so as to apply a high voltage to cause discharge to an ignition plug. The ignition plug includes a discharging section that discharges inside a combustion chamber of the engine 1. The fuel injector 12 is a device that injects fuel toward an intake port of the engine 1. A fuel pump 18 for supplying fuel to the engine 1 is also one of the electrical components related to the engine 1. The operation of the fuel pump 18 is also controlled by the vehicle control unit 2.

The engine 1 further includes a crank angle sensor 13, a coolant temperature sensor 14, an intake temperature sensor 15, and a throttle opening degree sensor 16. The crank angle sensor 13 is arranged so as to detect the rotation angle of a crankshaft of the engine 1. The coolant temperature sensor 14 is arranged so as to detect the temperature of a coolant for cooling the engine 1. The intake temperature sensor 15 is arranged so as to detect the temperature of air (intake air) to be taken in the engine 1. The throttle opening degree sensor 16 is arranged so as to detect the opening degree of a throttle valve included in the engine 1. Output signals of the sensors 13, 14, 15, and 16 are input to the vehicle control unit 2.

To the vehicle control unit 2, further, a vehicle speed sensor 17 that detects the traveling speed (vehicle speed) of the vehicle 10 is connected. The vehicle control unit 2 includes an input interface 20 to which detection signals from the sensors 13 to 17 are input. The vehicle control unit 2 includes an actuator drive circuit 21 for driving electrical components (actuators) included in the engine 1 and electrical components (actuators, e.g. a fuel pump) included in parts other than the engine 1 of the vehicle 10. The vehicle control unit 2 further includes a communication interface 22, a microcomputer 23, and a vehicle information holding memory 24.

The communication interface 22 is arranged so as to perform give/receive of commands and data with a communication cable 25. The microcomputer 23 is programmed so as to control the actuator drive circuit 21 according to output signals etc. , of the sensors input to the input interface 20. The vehicle information memory 24 is arranged so as to hold, for example, output signals of the sensors input to the input interface 20 and a control history of electrical components by the actuator drive circuit 21 as vehicle information (vehicle control information). More specifically, the microcomputer 23 is arranged to write the vehicle information in the vehicle information holding memory 24. The microcomputer 23 is also programmed so as to, according to a request code received by the communication interface 22, read necessary vehicle information out of the vehicle information memory 24, and send out response data including the vehicle information to the communication cable 25.

The display unit 3 is mounted on the vehicle 10, and connected to a communication cable 35. To the distal end of the communication cable 35, a first connector (coupler) 41 is coupled. The first connector 41 is arranged so as to be capable of coupling with a corresponding second connector (coupler) 42. The second connector 42 is connected to the distal end of a communication cable 25. The first connector 41 and the second connector 42 are arranged so as to be capable of coupling with each other and releasing the coupling.

The display unit 3 includes a meter display section 31, a communication interface 32, and a microcomputer 33. The meter display section 31 is arranged so as to be capable of displaying, for example, a vehicle speed, an engine speed, a warning, a coolant temperature, and an intake air temperature. The information to be displayed is obtained from the vehicle control unit 2, via a wired communication line 30 including the communication cables 25 and 35, by the communication interface 32. The microcomputer 33 is programmed so as to send out, from the communication interface 32 to the communication cable 35, a request code to request vehicle information necessary for a display. Further, the microcomputer 33 is arranged so as to extract vehicle information from a response code received by the communication interface 32 from the communication cable 35. The microcomputer 33 is further programmed so as to control the meter display section 31 in order to cause the meter display section 31 to display the extracted vehicle information.

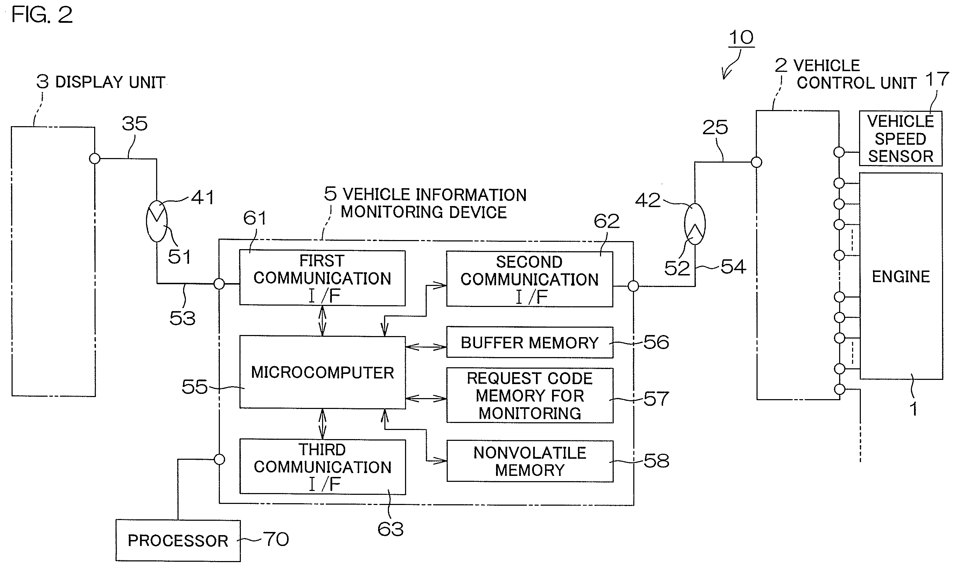

FIG. 2 is a block diagram for explaining the configuration of a vehicle information monitoring device 5 according to a preferred embodiment of the present invention. The vehicle information monitoring device 5 is arranged so as to be connected between the vehicle control unit 2 and the display unit 3 and relay information communication between the vehicle control unit 2 and the display unit 3. That is, the vehicle information monitoring device 5 is arranged so as to function as a relay unit to relay information communication between the vehicle control unit 2 and the display unit 3. The vehicle information monitoring device 5 is not mounted on the vehicle 10 in normal use of the vehicle 10. That is, the vehicle information monitoring device 5 is connected between the vehicle control unit 2 and the display unit 3 when necessary. In this connected state, the vehicle information monitoring device 5 may be temporarily held in the vehicle 10, or may be placed at a place other than the vehicle 10. When the vehicle 10 is made to travel with the vehicle information monitoring device 5 connected, the vehicle information monitoring device 5 may be temporarily held on the vehicle 10, or the vehicle information monitoring device 5 may be held in a retainer (a bag, a belt, or the like) that an occupant carries with him/her.

The vehicle information monitoring device 5 includes a first connecting portion 51 to which the first connector 41 connected to the display unit 3 via the communication cable 35 is connected and a second connecting portion 52 to which the second connector 42 connected to the vehicle control unit 2 via the communication cable 25 is connected. The first connecting portion 51 has a form of a connector capable of coupling with the first connector 41. The second connecting portion 52 similarly has a form of a connector capable of coupling with the second connector 42. The first connecting portion 51 is connected, via a communication cable 53, to a circuit board provided inside the casing of the vehicle information monitoring device 5. Similarly, the second connecting portion 52 is connected, via a communication cable 54, to a circuit board provided inside the casing of the vehicle information monitoring device 5.

The vehicle information monitoring device 5 includes a first communication interface 61, a second communication interface 62, a microcomputer 55, a third communication interface 63, a buffer memory 56, a request code memory for monitoring 57, and a nonvolatile memory 58. The first communication interface 61 is a communication interface for communication with the display unit 3. The second communication interface 62 is a communication interface for communication with the vehicle control unit 2. The third communication interface 63 is a communication interface for communication with an external processor 70 (e.g. a personal computer incorporated with a predetermined tool).

The buffer memory 56 is a storage unit for temporarily storing response data (vehicle information) received by the second communication interface 62 from the vehicle control unit 2. The request code memory for monitoring 57 is a storage unit for storing a request code to request vehicle information that needs to be obtained from the vehicle control unit 2. For example, a request code to request vehicle information other than vehicle information the display unit 3 requests is stored in the request code memory for monitoring 57. The nonvolatile memory 58 is a storage unit for storing response data (vehicle information) obtained from the vehicle control unit 2.

The microcomputer 55 is arranged so as to send out a request code stored in the request code memory for monitoring 57 from the second communication interface 62 to the vehicle control unit 2. Moreover, the microcomputer 55 is programmed so as to write a part of response data received from the vehicle control unit 2 by the second communication interface 62 in the buffer memory 56. Further, the microcomputer 55 is programmed so as to write the whole of response data received from the vehicle control unit 2 by the second communication interface 62 in the nonvolatile memory 58. Further, the microcomputer 55 is programmed so as to cause the first communication interface 61 to send out a response code corresponding to a request code received from the display unit 3 by the first communication interface 61 to the display unit 3. Still moreover, the microcomputer 55 is programmed so as to receive a write command for a request code for monitoring, from the external processor 70, via the third communication interface 63, and write the request code for monitoring in the request code memory for monitoring 57. Further, the microcomputer 55 is programmed so as to accept an output request for response data, from the external processor 70, via the third communication interface 63. Further, the microcomputer 55 is programmed so as to, in response to the output request, read storage data out of the nonvolatile memory 58, and send out the read-out data from the third communication interface 63. The microcomputer 55 may have an operation mode for outputting response data received by the second communication interface 62 from the third communication interface 63 in place of the storage data of the nonvolatile memory 58.

The vehicle information monitoring device 5 is provided in, for example, a service center or the like for maintenance of the vehicle 10. That is, in a normal use state of the vehicle 10, the vehicle information monitoring device 5 is not mounted on the vehicle 10. That is, in a normal use state of the vehicle 10, the vehicle 10 has an electrical configuration as shown in FIG. 1. Therefore, the vehicle control unit 2 and the display unit 3 mutually perform information communication via the wired communication line 30.

When the vehicle 10 is taken in the service center or the like and it becomes necessary to obtain vehicle information in the vehicle control unit 2, the vehicle information monitoring device 5 is connected between the vehicle control unit 2 and the display unit 3 to reach the configuration shown in FIG. 2. By driving the vehicle 10 in this state, vehicle information can be obtained from the vehicle control unit 2 and stored in the buffer memory 56 and the nonvolatile memory 58. The vehicle information received from the vehicle control unit 2 and the vehicle information stored in the nonvolatile memory 58 can be taken out to the outside via the third communication interface 63. The nonvolatile memory 58 may be formed by a memory unit that can be detachably attached to the vehicle information monitoring device 5. A specific example of the memory unit is a flash memory unit represented by a memory card and a USB memory. In this case, the vehicle information monitoring device 5 includes a reader/writer unit for reading and writing data for the memory unit.

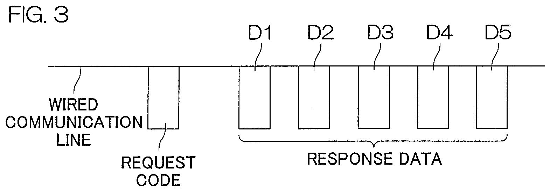

FIG. 3 is a view showing examples of data that appear on the wired communication line 30 in the normal use state (refer to FIG. 1) of the vehicle 10. The display unit 3 sends out request codes to the wired communication line 3 at a predetermined period (e.g. 15.625msec). The request code may be 1 byte of data. The request code has a value determined according to information that needs to be obtained from the vehicle control unit 2. For example, by determining the value of the request code as "0x01," the request code serves as a request code to request coolant temperature data. In this case, the vehicle control unit 2 sends out coolant temperature data as response data.

The response data to be sent out to the wired communication line 30 by the vehicle control unit 2 in response to the request code consists of, for example, data D1, D2, D3, D4, and D5. Each of the data D1 to D5 is, for example, 1 byte of data. That is, the vehicle control unit 2 is arranged so as to send out 5 bytes of response data in response to one request code. In the present preferred embodiment, the data D1 indicates an engine speed, the data D2 indicates a vehicle speed, the data D3 indicates warning information, the data 4 indicates vehicle information (a coolant temperature or the like) according to the content of the request code, and the data D5 indicates checksum data of the data D1 to D4. The warning information is information indicating whether there is a fault and the fault type. The checksum data may be, for example, 8 low-order bits of an integrated value of the data D1 to D4.

Of the 5 bytes of response data, first 3 bytes of data D1 to D3 are data that the vehicle control unit 2 sends out every time receiving a request code. That is, the engine speed, vehicle speed, and warning information are sent out to the wired communication line 30 irrespective of the content of the request code. This is first vehicle information with a high display priority in the display unit 3. Of the 5 bytes of response data, the fourth byte of data D4 includes second vehicle information that varies according to the content of the request code received by the vehicle control unit 2. The second vehicle information is information whose display priority in the display unit 3 is lower than that of the first vehicle information.

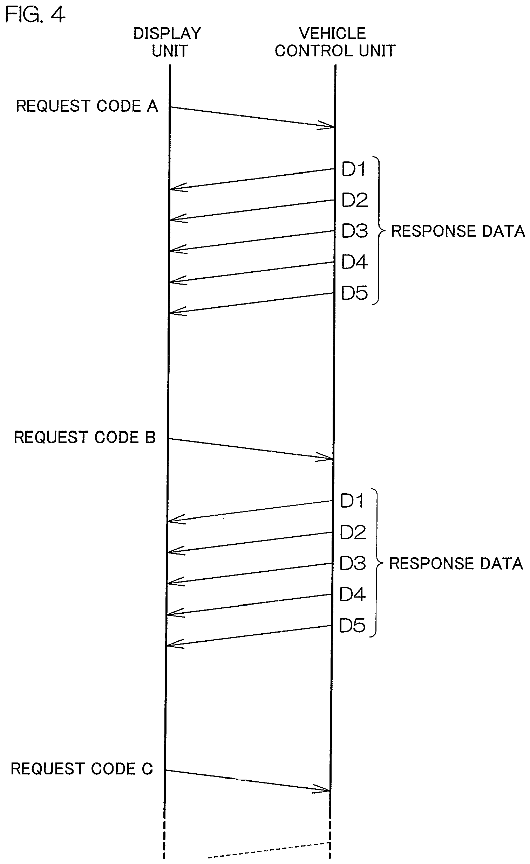

FIG. 4 is a view showing a communication timing between the display unit 3 and the vehicle control unit 2 in the normal use state (refer to FIG. 1) of the vehicle 10. The display unit 3 sends out request codes A, B, and C sequentially at a predetermined fixed period. The vehicle control unit 2 having received the request codes A, B, and C sends out response data D1 to D5 each time of reception. The response data D1 to D5 are received by the display unit 3. It is structured so that sending out of the request codes from the display unit 3 and sending out of the response data D1 to D5 from the vehicle control unit 2 are completed within the request code generating period by the display unit 3.

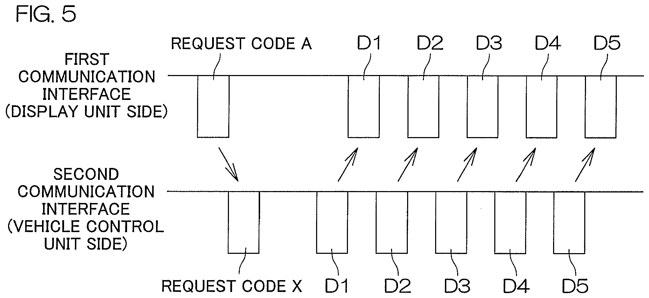

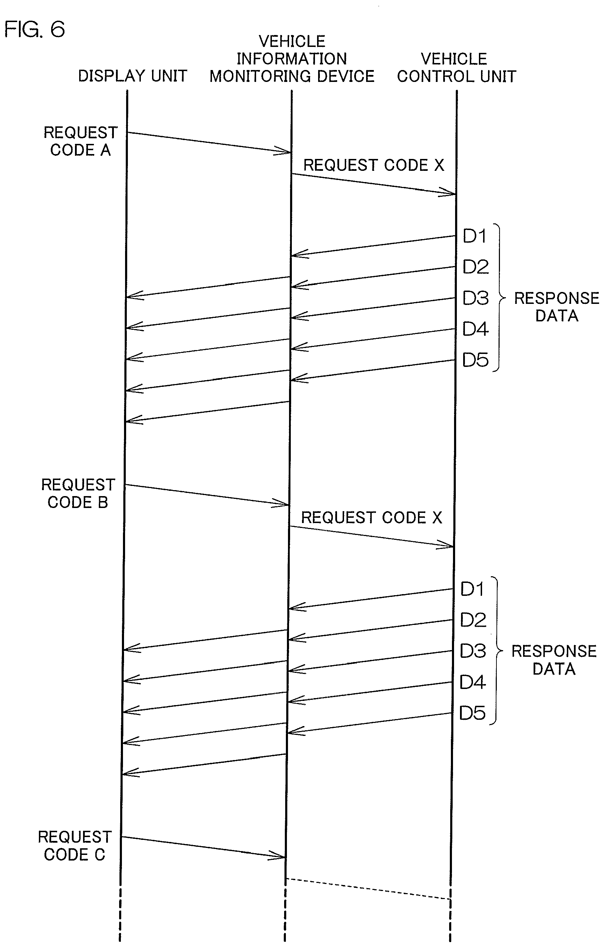

FIG. 5 is a view for explaining the content of communication when the vehicle information monitoring device 5 is connected between the display unit 3 and the vehicle control unit 2 (refer to FIG. 2). FIG. 6 is a timing chart showing a communication timing thereof. In the upper section of FIG. 5, shown is data that is exchanged between the display unit 3 and the vehicle information monitoring device 5, that is, data that is transmitted and received by the first communication interface 61. In the lower section of FIG. 5, shown is data that is exchanged between the vehicle information monitoring device 5 and the vehicle control unit 2, that is, data that is transmitted and received by the second communication interface 62.

The display unit 3, as in the case of a normal use state, sends out request codes A, B, and C to the communication cable 35 at a predetermined period (e.g. 15.625msec) . On the other hand, the vehicle control unit 2 sends out 5 bytes of response data D1 to D5 to the communication cable 25 every time receiving a request code. The request code sent out by the display unit 3 is received by the vehicle information monitoring device 5. The vehicle information monitoring device 5 transmits the request code received from the display unit 3 or a request code different therefrom to the vehicle control unit 2 via the communication cable 25. Further, the vehicle information monitoring device 5 transmits response data D1 to D5 including data D4 corresponding to the request code received from the display unit 3 to the display unit 3 via the communication cable 35. The content of data D4 included in the response data is the same as the value received from the vehicle control unit 2 in some cases, and is different therefrom in some other cases.

When this is described in greater detail by referring to FIG. 5, the microcomputer 55 of the vehicle information monitoring device 5, when the first communication interface 61 receives a request code A from the display unit 3, in response thereto, causes the second communication interface 62 to transmit a request code X toward the vehicle control unit 2. The request code X is equal to the request code A in some cases, and is different from the request code A in some other cases. Specifically, the microcomputer 55 refers to the buffer memory 56 to check if there is stored response data corresponding to the request code A. In the buffer memory 56, a capacity large enough to store N sets (N is a natural number not less than 2) of response data (only the part of data D4) received from the vehicle control unit 2 is secured.

If there is stored no response data corresponding to the request code A in the buffer memory 56, the microcomputer 55 makes the request code X be a value equal to the request code A. The request code X is transmitted to the vehicle control unit 2. That is, if there is no correspondence to the request code A in the last N times of received response data from the vehicle control unit 2, the request code A is transmitted to the vehicle control unit 2 as it is.

If there is stored response data (data D4) corresponding to the request code A in the buffer memory 56, the microcomputer 55 reads a request code different from the request code A out of the request code memory for monitoring 57. The read-out request code is transmitted, as the request code X, to the vehicle control unit 2.

When the second communication interface 62 receives response data from the vehicle control unit 2, the microcomputer 55 causes the first communication interface 61 to transmit, out of the response data, the received data of data D1 to D3 to the display unit 3 as it is.

On the other hand, with regard to the response data D4, when the request code X is equal to the request code A, the microcomputer 55 causes the first communication interface 61 to transmit the value received by the first communication interface 61 to the display unit 3 as it is as response data. When the request code X is not equal to the request code A, the microcomputer 55 reads response data D4 corresponding to the request code A out of the buffer memory 56, and transmits the same from the first communication interface 61 to the display unit 3. In either case, the microcomputer 55 writes data D4 out of the response data received by the second communication interface 62 in the buffer memory 56. Further, the microcomputer 55 writes as log data all of the 5 bytes of response data D1 to D5 received by the second communication interface 62 in the nonvolatile memory 58.

The microcomputer 55, further, when the request code X is equal to the request code A, causes the first communication interface 61 to transmit the response data D5 (checksum data) received by the second communication interface 62 to the display unit 3 as it is as response data D5. When the request code X is not equal to the request code A, the microcomputer 55 determines an integrated value of the response data D1 to D4 to be transmitted from the first communication interface 61, and takes 8 low-order bits thereof as checksum data. The prepared checksum data is transmitted, as response data D5, from the first communication interface 61 to the display unit 3.

As a result of such operation being repeated, the vehicle information monitoring device 5 can accumulate response data corresponding to request codes stored in the request code memory for monitoring 57 stored in the buffer memory 56 and the nonvolatile memory 58.

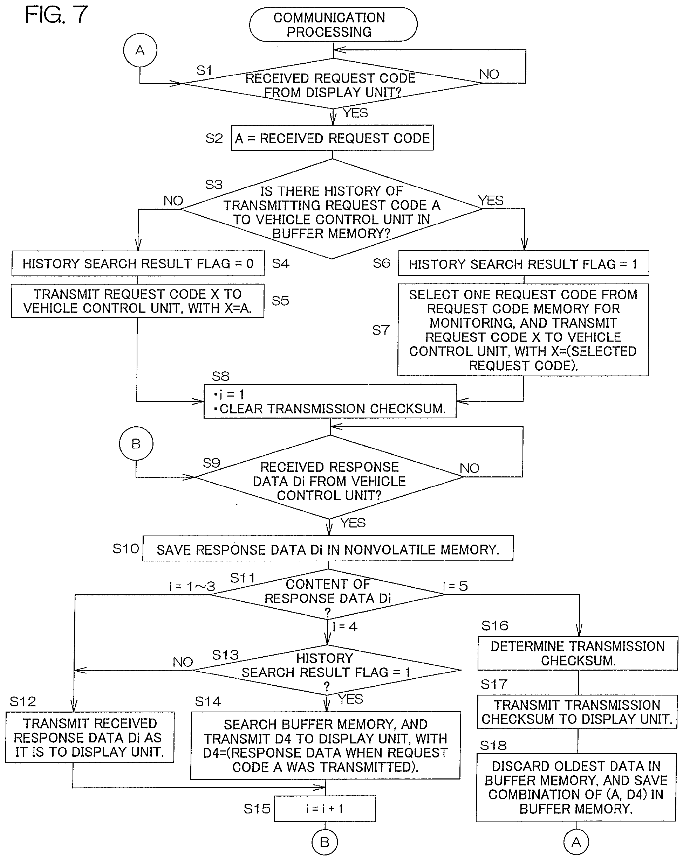

FIG. 7 is a flowchart for explaining a processing that is executed by the microcomputer 55 of the vehicle information monitoring device 5. The microcomputer 55, when the first communication interface 61 receives a request code from the display unit 3 (step S1: YES), sets the received request code as a request code A (step S2).

The microcomputer 55 then searches the buffer memory 56 to decide whether there is stored a response code corresponding to the request code A (step S3). That is, the microcomputer 55 decides whether there is a history of transmitting the request code A to the vehicle control unit 2 in the buffer memory 56. When the decision is denied, the microcomputer 55 sets a history search result flag to 0 (reset) (step S4), and substitutes the request code A for a request code X that needs to be transmitted to the vehicle control unit 2 (step S5). That is, the request code A is transmitted to the vehicle control unit 2 via the second communication interface 62 (step S5).

On the other hand, if the decision in step S3 is affirmed, the microcomputer 55 sets the history search result flag to 1 (set) (step S6), and searches the request code memory for monitoring 57. That is, the microcomputer 55 selects any one of the request codes stored in the request code memory for monitoring 57, and sets the selected request code as a request code X (step S7). The request code X is transmitted from the second communication interface 62 to the vehicle control unit 2 (step S7).

After the process in step S5, S7, the microcomputer 55 resets an internal variable i (i=1, 2, 3, 4, 5) for identifying response data D1 to D5 to 1 (step S8) . Further, the microcomputer 55 clears the checksum data of transmission data to be transmitted from the first communication interface 61 (step S8) .

The microcomputer 55, when the second communication interface 62 receives response data from the vehicle control unit 2 (step S9: YES), saves the response data Di (D1 to D5) in the nonvolatile memory 58 (step S10). Further, the microcomputer 55 carries out a process according to the response data Di (step S11). Specifically, with regard to data D1 to D3 of the response data, that is, when i=1∼3, the microcomputer 55 transmits the received response data Di as it is from the first communication interface 61 to the display unit 3 (step S12).

With regard to response data D4, that is, when i=4, the microcomputer 55 checks whether the history search result flag indicates 1 (step S13). If the flag does not indicate 1, the microcomputer 55 carries out the process in step S12. If the history search result flag indicates 1, the microcomputer 55 searches the inside of a storage area of the buffer memory 56. Then, the microcomputer 55 reads out response data when the request code A was transmitted to the vehicle control unit 2 in the past, and causes the first communication interface 61 to transmit the response data to the display unit 3 as data D4 (step S14) .

After the process in step S11, S13, the microcomputer 55 increases the internal valuable i by 1, and returns to step S9 (step S15).

When the received response data is response data D5, that is, when i=5, the microcomputer 55 determines an integrated value of data transmitted from the first communication interface 61 to the display unit 3, and takes 8 low-order bits thereof as checksum data (step S16). Then, the microcomputer 55 causes the first communication interface 61 to transmit the obtained checksum data to the display unit 3 as response data D5 (step S17). Further, the microcomputer 55 discards the oldest data of the stored data in the buffer memory 56, and stores a combination of the request code A and response data D4 corresponding thereto in the buffer memory 56 as the latest data (A, D4) (step S18). However, the microcomputer 55 does not perform discard of the oldest data until the number of stored data (sets of request codes and response data corresponding thereto) in the buffer memory 56 reaches N. When the number of stored data reaches N, the microcomputer 55 deletes the oldest data, and stores a combination of the request code A and response data D4 corresponding thereto in the buffer memory 56 as the latest data (A, D4). The subsequent processing returns to step S1.

As in the above, according to the present preferred embodiment, vehicle information can be obtained by connecting the vehicle information monitoring device 5 halfway on the wired communication line 30 between the vehicle control unit 2 and the display unit 3. In a normal use state of the vehicle 10, the vehicle information monitoring device 5 does not need to be mounted on the vehicle 10. Therefore, it is not necessary to secure a space to mount the vehicle information monitoring device 5 in the vehicle 10. Moreover, when designing the vehicle information monitoring device 5, it is not necessary for the designer to assume mounting on the vehicle 10. Therefore, even when the vehicle 10 is a saddle type vehicle represented by a motorcycle, the vehicle information monitoring device 5 can be freely designed according to a necessary function, having no concern for mountability to the vehicle 10. Because vehicle information can be obtained by using such a vehicle information monitoring device 5, it is not necessary to make a significant modification in the display unit 3 or the vehicle control unit 2. Specifically, it is not necessary that the display unit 3 or the vehicle control unit 2 includes a dedicated memory and dedicated port or interface for monitoring vehicle information. For this reason, complication and an increase in size of the display unit 3 or the vehicle control unit 2 can be avoided.

Moreover, the vehicleinformation monitoring device 5 is arranged so as to relay information communication between the display unit 3 and the vehicle control unit 2, and thus can obtain vehicle information in a state where information communication between the display unit 3 and the vehicle control unit 2 is being performed. Therefore, vehicle information can be obtained in a driving state of the vehicle 10. Accordingly, various vehicle information generated in the driving state of the vehicle 10 can be obtained, so that a wide variety of vehicle information can be obtained. Consequently, appropriate maintenance work can be carried out based on the obtained vehicle information.

Further, the vehicle information monitoring device 5 is arranged so as to immediately transmit, of the response data from the vehicle control unit 2, the vehicle speed, engine speed, and warning information to the display unit 3. Therefore, the display unit 3 can display important information (high-priority information) without delay even when the vehicle information monitoring device 5 is connected. On the other hand, in terms of the response data D4 for which prompt display updating is not always necessary, the vehicle information monitoring device 5 transmits data obtained before from the vehicle control unit 2 to the display unit 3. Accordingly, the vehicle information monitoring device 5 can supply response data corresponding to a request code to the display unit 3, while obtaining vehicle information that needs to be monitored from the vehicle control unit 2.

Moreover, the storage capacity of the buffer memory 56 that temporarily stores request codes and response data in combination is limited to a fixed amount. Additionally, old data is deleted sequentially. For this reason, also in terms of the response data D4, provision of excessively old data for the display unit 3 can be avoided. Therefore, the validity of a display in the display unit 3 is not lost.

Although a preferred embodiment of the present invention has been described above, the present invention can also be embodied in other modes. For example, in the foregoing preferred embodiment, the connecting portions by the first connector 41 and the second connector 42 are provided at an intermediate portion of the wired communication line 30, but similar connecting portion(s) may be provided at one or both of the opposite ends of the wired communication line 30. For example, a connector with a communication cable that is a component of the wired communication line 30 may be provided on the display unit 3. It suffices to connect the connector to the first connecting portion 51 of the vehicle information monitoring device 5 and connect the communication cable to the second connecting portion 52 of the vehicle information monitoring device 5. Of course, a similar connector may be provided on the vehicle control unit 2.

Moreover, the vehicleinformation monitoring device 5 may be arranged so that a display unit can be connected. The display unit may be arranged so as to be capable of displaying vehicle information stored in the nonvolatile memory 58.

Further, the vehicle information monitoring device 5 of the preferred embodiment includes the nonvolatile memory 58, but the nonvolatile memory 58 may be omitted. In this case, the microcomputer 55 operates, for example, so as to output response data received by the second communication interface 62 from the third communication interface 63 to the external processor 70. Accordingly, vehicle information (log data) can be accumulated in the external processor 70.

Moreover, in place of the nonvolatile memory 58, a hard disk drive may be used, or a volatile memory (DRAM) with a backup power supply may be used.

In the following, the correspondence between the terms in the claims and the terms in the preferred embodiment will be enumerated.
Vehicle information display device: Display unit 3
Vehicle control device: Vehicle control unit 2
Vehicle information monitoring device: Vehicle information monitoring device 5
First communication means: First communication interface 61, first connecting portion 51
Second communication means: Second communication interface 62, second connecting portion 52
Request control means: Microcomputer 55, steps S1 to S7
Response control means: Microcomputer 55, steps S11 to S17
Storage means: Buffer memory 56
Request code storage means: Request code memory for monitoring 57
Storage control means: Microcomputer 55, step S18
Nonvolatile storage means: Nonvolatile memory 58
Wired communication line: Wired communication line 30
First connector: First connector 41
Second connector: Second connector 42
First connecting portion: First connecting portion 51
Second connecting portion: Second connecting portion 52

**Reference Signs List**

| | |
|---|---|
| 1 Engine | 2 Vehicle control unit |
| 3 Display unit | 5 Vehicleinformation monitoringdevice |
| 10 Vehicle | 11 Ignition coil |
| 12 Fuel injector | 13 Crank angle sensor |
| 14 Coolant temperature sensor | 15 Intake air temperature sensor |
| 16 Throttle opening degree sensor | 17 Vehicle speed sensor |
| 18 Fuel pump | 20 Input interface |
| 21 Actuator drive circuit | 22 Communication interface |
| 23 Microcomputer | 24 Vehicle information holding memory |
| 25 Communication cable | 30 Wired communication line |
| 31 Meter display section | 32 Communication interface |
| 33 Microcomputer | 35 Communication cable |
| 41 First connector | 42 Second connector |
| 51 First connecting portion | 52 Second connecting portion |
| 53 Communication cable | 54 Communication cable |
| 55 Microcomputer | 56 Buffer memory |
| 57 Request code memory for monitoring | 58 Nonvolatile memory |
| 61 First communication interface | 62 Second communication interface |
| 63 Third communication interface | 70 Processor |

## Claims

1. A vehicle information monitoring device (5) for obtaining vehicle information from a vehicle control device (2) that communicates with a vehicle information display device (3),
the vehicle information display device (3) being arranged so as to generate a request code directed to the vehicle control device (2) and receive response data from the vehicle control device (2),
the vehicle control device (2) being arranged so as to generate response data including vehicle information according to a response code,
**characterized in that** the vehicle information monitoring device (5) comprises:
first communication means (61, 51) for communicating with the vehicle information display device (3);
second communication means (62, 52) for communicating with the vehicle control device (2);
request control means (55, S1-S7) for causing the second communication means (62, 52) to transmit a second request code when the first communication means (61, 51) receives a first request code;
response control means (55, S11-S17) for causing the first communication means (61, 51) to transmit response data corresponding to a first request code received by the first communication means (61, 51); and
storage means (56) for storing response data received by the second communication means (62, 52) in coordination with a second request code, wherein
the request control means (55, S1-S7) is arranged so as to cause, if response data corresponding to the first request code is not stored in the storage means (56), the second communication means (62, 52) to transmit the first request code as the second request code, and cause, if response data corresponding to the first request code is stored in the storage means (56), the second communication means (62, 52) to transmit a third request code different from the first request code as the second request code, and
the response control means (55, S11-S17) is arranged so as to cause the first communication means (61, 51) to transmit response data received by the second communication means (62, 52) when the second request code is equal to the first request code, and when the second request code is different from the first request code, read response data corresponding to the first request code out of the storage means (56) and cause the first communication means (61, 51) to transmit the response data.

2. The vehicle information monitoring device (5) according to claim 1, wherein the response data includes first vehicle information and second vehicle information that are different in type, and
the response control means (55, S11-S17) is arranged so as to include the first vehicle information in response data received by the second communication means (62, 52) in response data to be transmitted from the first communication means (61, 51) regardless of whether the second request code is equal to the first request code, include the second vehicle information in response data received by the second communication means (62, 52) in response data to be transmitted from the first communication means (61, 51) when the second request code is equal to the first request code, and read the second vehicle information in response data corresponding to the first request code out of the storage means (56) and include the second vehicle information in response data to be transmitted from the first communication means (61, 51) when the second request code is different from the first request code.

3. The vehicle information monitoring device (5) according to claim 1 or 2, further comprising request code storage means (57) storing a third request code that needs to be transmitted from the second communication means (62, 52), wherein
the request control means (55, S1-S7) is arranged so as to cause, when response data corresponding to the first request code is stored in the storage means (56), the second communication means (62, 52) to transmit as the second request code a third request code stored in the request code storage means (57).

4. The vehicle information monitoring device (5) according to any one of claims 1 to 3, further comprising storage control means (55, S18) for deleting an oldest data when response data stored in the storage means (56) reaches a predetermined amount.

5. The vehicle information monitoring device (5) according to any one of claims 1 to 4, further comprising response data storage means (58) for storing response data received by the second communication means, separately from the storage means (56).

6. The vehicle information monitoring device (5) according to any one of claims 1 to 5, wherein the response data includes checksum data, and
the response control means (55, S11-S17) is arranged so as to prepare checksum data corresponding to a data amount of response data the first communication means (61, 51) is caused to transmit, and include the checksum data in response data to be transmitted from the first communication means (61, 51) .

7. The vehicle information monitoring device (5) according to any one of claims 1 to 6, wherein the vehicle control device (2) and the vehicle information display device (3) are arranged to be connected by a wired communication line (30),
a first connector (41) and a second connector (42) that can couple with each other are provided halfway on the wired communication line (30),
the first connector (41) is connected to the vehicle information display device (3), and the second connector (42) is connected to the vehicle control device (2), and
the first communication means (61, 51) includes a first connecting portion (51) to be connected to the first connector (41), and the second communication means (62, 52) includes a second connecting portion (52) to be connected to the second connector (42).

8. The vehicle information monitoring device (5) according to any one of claims 1 to 7, the vehicle information monitoring device (5) is arranged to relay a request code and response data between the vehicle control device (2) and the vehicle information display device (3).

## Patentansprüche

1. Eine Fahrzeuginformationsüberwachungsvorrichtung (5) zum Erhalten von Fahrzeuginformationen von einer Fahrzeugsteuervorrichtung (2), die mit einer Fahrzeuginformationsanzeigevorrichtung (3) kommuniziert,
wobei die Fahrzeuginformationsanzeigevorrichtung (3) so angeordnet ist, dass sie einen Anforderungscode erzeugt, der an die Fahrzeugsteuervorrichtung (2) gerichtet ist, und Antwortdaten von der Fahrzeugsteuervorrichtung (2) empfängt,
wobei die Fahrzeugsteuervorrichtung (2) so angeordnet ist, dass sie Antwortdaten einschließlich Fahrzeuginformationen gemäß einem Antwortcode erzeugt,
**dadurch gekennzeichnet, dass**:
die Fahrzeuginformationsüberwachungsvorrichtung (5) folgende Merkmale aufweist:
eine erste Kommunikationseinrichtung (61, 51) zum Kommunizieren mit der Fahrzeuginformationsanzeigevorrichtung (3);
eine zweite Kommunikationseinrichtung (62, 52) zum Kommunizieren mit der Fahrzeugsteuervorrichtung (2);
eine Anforderungssteuereinrichtung (55, S1-S7) zum Bewirken dessen, dass die zweite Kommunikationseinrichtung (62, 52) einen zweiten Anforderungscode überträgt, wenn die erste Kommunikationseinrichtung (61, 51) einen ersten Anforderungscode empfängt;
eine Antwortsteuereinrichtung (55, S11-S17) zum Bewirken dessen, dass die erste Kommunikationseinrichtung (61, 51) Antwortdaten, die einem ersten Anforderungscode entsprechen, der durch die erste Kommunikationseinrichtung (61, 51) empfangen wird, überträgt; und
eine Speichereinrichtung (56) zum Speichern von Antwortdaten, die durch die zweite Kommunikationseinrichtung (62, 52) in Koordination mit einem zweiten Anforderungscode empfangen werden, wobei:
die Anforderungssteuereinrichtung (55, S1-S7) so angeordnet ist, dass sie, wenn Antwortdaten, die dem ersten Anforderungscode entsprechen, nicht in der Speichereinrichtung (56) gespeichert sind, bewirkt, dass die zweite Kommunikationseinrichtung (62, 52) den ersten Anforderungscode als den zweiten Anforderungscode überträgt, und wenn Antwortdaten, die dem ersten Anforderungscode entsprechen, in der Speichereinrichtung (56) gespeichert sind, bewirkt, dass die zweite Kommunikationseinrichtung (62, 52) einen dritten Anforderungscode, der sich von dem ersten Anforderungscode unterscheidet, als den zweiten Anforderungscode überträgt, und
die Antwortsteuereinrichtung (55, S11-S17) so angeordnet ist, dass sie bewirkt, dass die erste Kommunikationseinrichtung (61, 51) Antwortdaten, die durch die zweite Kommunikationseinrichtung (62, 52) empfangen werden, überträgt, wenn der zweite Anforderungscode gleich dem ersten Anforderungscode ist, und wenn sich der zweite Anforderungscode von dem ersten Anforderungscode unterscheidet, Antwortdaten, die dem ersten Anforderungscode entsprechen, aus der Speichereinrichtung (56) ausliest, und bewirkt, dass die erste Kommunikationseinrichtung (61, 51) die Antwortdaten überträgt.

2. Die Fahrzeuginformationsüberwachungsvorrichtung (5) gemäß Anspruch 1, bei der die Antwortdaten erste Fahrzeuginformationen und zweite Fahrzeuginformationen, die sich hinsichtlich ihres Typs unterscheiden, aufweist, und
wobei die Antwortsteuereinrichtung (55, S11-S17) so angeordnet ist, dass sie die ersten Fahrzeuginformationen in Antwortdaten, die durch die zweite Kommunikationseinrichtung (62, 52) empfangen werden, in Antwortdaten einschließt, die von der ersten Kommunikationseinrichtung (61, 51) übertragen werden sollen, unabhängig davon, ob der zweite Anforderungscode gleich dem ersten Anforderungscode ist, die zweiten Fahrzeuginformationen in Antwortdaten, die durch die zweite Kommunikationseinrichtung (62, 52) empfangen werden, in Antwortdaten, die von der ersten Kommunikationseinrichtung (61, 51) übertragen werden sollen, einschließt, wenn der zweite Anforderungscode gleich dem ersten Anforderungscode ist, und die zweiten Fahrzeuginformationen in Antwortdaten, die dem ersten Anforderungscode entsprechen, aus der Speichereinrichtung (56) ausliest und die zweiten Fahrzeuginformationen in Antwortdaten einschließt, die von der ersten Kommunikationseinrichtung (61, 51) übertragen werden sollen, wenn sich der zweite Anforderungscode von dem ersten Anforderungscode unterscheidet.

3. Die Fahrzeuginformationsüberwachungsvorrichtung (5) gemäß Anspruch 1 oder 2, die ferner eine Anforderungscodespeichereinrichtung (57) aufweist, die einen dritten Anforderungscode speichert, der von der zweiten Kommunikationseinrichtung (62, 52) übertragen werden soll, wobei:
die Anforderungssteuereinrichtung (55, S1-S7) so angeordnet ist, dass sie, wenn Antwortdaten, die dem ersten Anforderungscode entsprechen, in der Speichereinrichtung (56) gespeichert sind, bewirkt, dass die zweite Kommunikationseinrichtung (62, 52) als den zweiten Anforderungscode einen dritten Anforderungscode überträgt, der in der Anforderungscodespeichereinrichtung (57) gespeichert ist.

4. Die Fahrzeuginformationsüberwachungsvorrichtung (5) gemäß einem der Ansprüche 1 bis 3, die ferner eine Speichersteuereinrichtung (55, S18) zum Löschen ältester Daten, wenn Antwortdaten, die in der Speichereinrichtung (56) gespeichert sind, eine vorbestimmte Menge erreichen, aufweist.

5. Die Fahrzeuginformationsüberwachungsvorrichtung (5) gemäß einem der Ansprüche 1 bis 4, die ferner eine Antwortdatenspeichereinrichtung (58) zum Speichern von Antwortdaten, die durch die zweite Kommunikationseinrichtung empfangen werden, separat von der Speichereinrichtung (56) aufweist.

6. Die Fahrzeuginformationsüberwachungsvorrichtung (5) gemäß einem der Ansprüche 1 bis 5, bei der die Antwortdaten Prüfsummendaten aufweisen, und:
die Antwortsteuereinrichtung (55, S11-S17) so angeordnet ist, dass sie Prüfsummendaten herstellt, die einer Datenmenge von Antwortdaten entsprechen, deren Übertragung durch die erste Kommunikationseinrichtung (61, 51) bewirkt wird, und die Prüfsummendaten in Antwortdaten einschließt, die von der ersten Kommunikationseinrichtung (61, 51) übertragen werden sollen.

7. Die Fahrzeuginformationsüberwachungsvorrichtung (5) gemäß einem der Ansprüche 1 bis 6, bei der die Fahrzeugsteuervorrichtung (2) und die Fahrzeuginformationsanzeigevorrichtung (3) angeordnet sind, um durch eine verdrahtete Kommunikationsleitung (30) verbunden zu sein,
wobei ein erster Verbinder (41) und ein zweiter Verbinder (42), die miteinander gekoppelt sein können, auf halber Strecke an der verdrahteten Kommunikationsleitung (30) vorgesehen sind,
wobei der erste Verbinder (41) mit der Fahrzeuginformationsanzeigevorrichtung (3) verbunden ist und der zweite Verbinder (42) mit der Fahrzeugsteuervorrichtung (2) verbunden ist, und
wobei die erste Kommunikationseinrichtung (61, 51) einen ersten Verbindungsabschnitt (51) aufweist, der mit dem ersten Verbinder (41) verbunden werden soll, und die zweite Kommunikationseinrichtung (62, 52) einen zweiten Verbindungsabschnitt (52) aufweist, der mit dem zweiten Verbinder (42) verbunden werden soll.

8. Die Fahrzeuginformationsüberwachungsvorrichtung (5) gemäß einem der Ansprüche 1 bis 7, wobei die Fahrzeuginformationsüberwachungsvorrichtung (5) angeordnet ist, um einen Antwortcode und Antwortdaten zwischen der Fahrzeugsteuervorrichtung (2) und der Fahrzeuginformationsanzeigevorrichtung (3) weiterzuleiten.

## Revendications

1. Dispositif de surveillance d'informations de véhicule (5) pour obtenir des informations de véhicule d'un dispositif de commande de véhicule (2) qui communique avec un dispositif d'affichage d'informations de véhicule (3),
le dispositif d'affichage d'informations de véhicule (3) étant disposé de manière à générer un code de demande destiné au dispositif de commande de véhicule (2) et à recevoir des données de réponse du dispositif de commande de véhicule (2),
le dispositif de commande de véhicule (2) étant disposé de manière à générer des données de réponse comportant des informations de véhicule selon un code de réponse,
**caractérisé par le fait que**
le dispositif de surveillance d'informations de véhicule (5) comprend:
un premier moyen de communication (61, 51) destiné à communiquer avec le dispositif d'affichage d'informations de véhicule (3);
un deuxième moyen de communication (62, 52) destiné à communiquer avec le dispositif de commande de véhicule (2);
un moyen de commande de demande (55, S1 à S7) destiné à amener le deuxième moyen de communication (62, 52) à transmettre un deuxième code de demande lorsque le premier moyen de communication (61, 51) reçoit un premier code de demande;
un moyen de commande de réponse (55, S11 à S17) destiné à amener le premier moyen de communication (61, 51) à transmettre les données de réponse correspondant à un premier code de demande reçu par le premier moyen de communication (61, 51); et
un moyen de mémorisation (56) destiné à mémoriser les données de réponse reçues par le deuxième moyen de communication (62, 52) en coordination avec un deuxième code de demande,
dans lequel
le moyen de commande de demande (55, S1 à S7) est disposé de manière à amener le deuxième moyen de communication (62, 52), si les données de réponse correspondant au premier code de demande ne sont pas mémorisées dans le moyen de mémorisation (56), à transmettre le premier code de demande comme deuxième code de demande et à amener le deuxième moyen de communication (62, 52), si les données de réponse correspondant au premier code de demande sont mémorisées dans le moyen de mémorisation (56), à transmettre un troisième code de demande différent du premier code de demande comme deuxième code de demande, et
le moyen de commande de réponse (55, S11 à S17) est disposé de manière à amener le premier moyen de communication (61, 51) à transmettre les données de réponse reçues par le deuxième moyen de communication (62, 52) lorsque le deuxième code de demande est égal au premier code de demande et, lorsque le deuxième code de demande est différent du premier code de demande, à lire les données de réponse correspondant au premier code de demande du moyen de mémorisation (56) et à amener le premier moyen de communication (61, 51) à transmettre les données de réponse.

2. Dispositif de surveillance d'informations de véhicule (5) selon la revendication 1, dans lequel les données de réponse comportent des premières informations de véhicule et des deuxièmes informations de véhicule qui sont de type différent, et
le moyen de commande de réponse (55, S11 à S17) est disposé de manière à inclure les premières informations de véhicule dans les données de réponse reçues par le deuxième moyen de communication (62, 52) dans les données de réponse à transmettre par le premier moyen de communication (61, 51), indépendamment du fait que le deuxième code de demande soit égal ou non au premier code de demande, à inclure les deuxièmes informations de véhicule dans les données de réponse reçues par le deuxième moyen de communication (62, 52) dans les données de réponse à transmettre par le premier moyen de communication (61, 51) lorsque le deuxième code de demande est égal au premier code de demande, et à lire les informations du deuxième véhicule dans les données de réponse correspondant au premier code de demande du moyen de mémorisation (56) et à inclure les deuxièmes informations de véhicule dans les données de réponse à transmettre par le premier moyen de communication (61, 51) lorsque le deuxième code de demande est différent du premier code de demande.

3. Dispositif de surveillance d'informations de véhicule (5) selon la revendication 1 ou 2, comprenant par ailleurs un moyen de mémorisation de code de demande (57) mémorisant un troisième code de demande qui doit être transmis par le deuxième moyen de communication (62, 52), dans lequel
le moyen de commande de demande (55, S1 à S7) est disposé de manière à amener le deuxième moyen de communication (62, 52), lorsque les données de réponse correspondant au premier code de demande sont mémorisées dans le moyen de mémorisation (56), à transmettre comme deuxième code de demande un troisième code de demande mémorisé dans le moyen de mémorisation de code de demande (57).

4. Dispositif de surveillance d'informations de véhicule (5) selon l'une quelconque des revendications 1 à 3, comprenant par ailleurs un moyen de commande de mémorisation (55, S18) destiné à supprimer une donnée la plus ancienne lorsque les données de réponse mémorisées dans le moyen de mémorisation (56) atteignent une quantité prédéterminée.

5. Dispositif de surveillance d'informations de véhicule (5) selon l'une quelconque des revendications 1 à 4, comprenant par ailleurs un moyen de mémorisation de données de réponse (58) destiné à mémoriser les données de réponse reçues par le deuxième moyen de communication, séparément du moyen de mémorisation (56).

6. Dispositif de surveillance d'informations de véhicule (5) selon l'une quelconque des revendications 1 à 5, dans lequel les données de réponse comportent des données de somme de contrôle, et
le moyen de commande de réponse (55, S11 à S17) est disposé de manière à préparer les données de somme de contrôle correspondant à une quantité des données de réponse que le premier moyen de communication (61, 51) est amené à transmettre, et à inclure les données de somme de contrôle dans les données de réponse à transmettre par le premier moyen de communication (61, 51).

7. Dispositif de surveillance d'informations de véhicule (5) selon l'une quelconque des revendications 1 à 6, dans lequel le dispositif de commande de véhicule (2) et le dispositif d'affichage d'informations de véhicule (3) sont disposés de manière à être connectés par une ligne de communication par câble (30),
un premier connecteur (41) et un deuxième connecteur (42) que peuvent être couplés l'un à l'autre sont prévus à mi-chemin sur la ligne de communication par câble (30),
le premier connecteur (41) est connecté au dispositif d'affichage d'informations du véhicule (3), et le deuxième connecteur (42) est connecté au dispositif de commande du véhicule (2), et
le premier moyen de communication (61, 51) comporte une première partie de connexion (51) à connecter au premier connecteur (41), et le deuxième moyen de communication (62, 52) comporte une deuxième partie de connexion (52) à connecter au deuxième connecteur (42).

8. Dispositif de surveillance d'informations de véhicule (5) selon l'une quelconque des revendications 1 à 7, dans lequel le dispositif de surveillance d'informations de véhicule (5) est disposé de manière à relayer un code de demande et des données de réponse entre le dispositif de commande de véhicule (2) et le dispositif d'affichage d'informations de véhicule (3).
